# EUROPEAN PATENT SPECIFICATION

(11) **EP 1 564 175 B1**
(45) Date of publication and mention of the grant of the patent: **27.06.2012**
(21) Application number: 05380014.0
(22) Date of filing: 25.01.2005
(51) Int. Cl.: B65D 85/672, B65H 49/32, B65D 85/04, H02G 11/02

(54) **Unwinder for cable rolls**
Kabelrollenabwickler
Dérouleur pour tambours de câble

(30) Priority: 11.02.2004 ES 200400289 U
(43) Date of publication of application: 17.08.2005
(73) Proprietor: Lazaro Arnaiz, Jose Luis, 29041 Madrid (ES)
(72) Inventor: Lazaro Arnaiz, Jose Luis, 29041 Madrid (ES)
(74) Representative: Elosegui de la Pena, Inigo

(56) References cited:
- EP-A- 0 116 214
- EP-A- 0 716 032
- WO-A-00/44661
- WO-A-96/11153
- US-A- 3 027 003
- US-A- 4 369 881
- US-A- 4 883 178
- US-A- 5 641 067

## Description

### PURPOSE OF THE INVENTION

The present invention relates to an unwinder for cable rolls, specifically for cables that are wound around a reel or spool, which, on the one hand, significantly facilitates cable unwinding operations and, on the other, serves as packing for the cable reel during storage and transport thereof, keeping said cable perfectly protected at all times.

The invention is, therefore, applicable in the field of electrical material, particularly the field of cable handling and consumption, within both the energy and telecommunications fields.

### BACKGROUND OF THE INVENTION

As is well-known, electric cables, both those used in energy transport installations and those used at the antennae level or other cases, are marketed in the form of rolls, sometimes lodged inside a cardboard box or plastic receptacle, and in other cases mounted on a reel or spool.

In the first case, the box or plastic receptacle has an opening that is axially located with respect to the roll, such that the cable emerges to the outside through said opening, and progressively unwinds as it is tractioned therefrom. During this unwinding process, torsion on the cable is produced, which sometimes causes deterioration thereof, especially in the case of co-axial cables, which, as is well-known, are covered by a very fine mesh of copper wires.

This problem of torsion during the cable unwinding manoeuvre is eliminated if the cable is installed on a reel or spool and it is desired to wind it by means of tangential traction and turning of said spool. In order to achieve this effect, it is necessary to have an adequate holder on which to mount the spool's tubular or hollow axis, which generally is not available, such that, in practice, the spool is made to roll on the floor, which is an uncomfortable and uncontrolled operation that very often ends with the reel or spool being stabilised by pressing the floor over one of its faces or surfaces, such that the cable is extracted therefrom in a manner analogous to the first case mentioned, that is, with torsion of the cable likewise being produced during the unwinding thereof, with the above-stated ensuing problems.

In an attempt to overcome this problem, invention patent WO 00/44661 discloses a container capable of receiving therein a cable-bearing reel, which in turn is capable of allowing turning thereof for unwinding, said cable exiting to the exterior of the container through an opening or slot made in the container.

The problem exhibited by this device lies in the fact that, in order to mount the spool on the box or container, a mechanism with an extremely complex structuring is used, wherein a plurality of parts intervene, specifically six, two bushings and four connectors, said connectors having interlocking teeth, all of which substantially complicates the manufacturing process of these parts, and consequently the final product, since complex, and therefore expensive, progressive molds are necessary.

Consequently, given the structural complexity of the above-mentioned unwinder, the latter has a multi-use character, which forces the user to perform unmounting of the worn out spool and mounting of the new, full spool, an operation which is tedious and complicated; therefore, it would be desirable to have a single-use unwinder that may be disposed of when the cable contained therein is worn out.

### DESCRIPTION OF THE INVENTION

The unwinder proposed by the invention solves the above-stated problems in a completely satisfactory manner, since, devised for cables wound around reels or spools, it incorporates own means which facilitate the necessary turning of said spool in order to unwind the cable without any torsion whatsoever, with an extremely simple structure that provides the assembly with a single-use character.

To this end, and in more detail, said unwinder is materialised in a prismatic cardboard box, with the appropriate dimensions to lodge within it, while leaving some room, the cable-bearing reel, with the specificity that said box incorporates, centred on opposite faces, respective co-axial openings which allow for passage of a tubular axis, whose length is in accordance with the separation between the above-mentioned box walls, designed to cross the hollow axis of the reel lodged in the box, supplemented by a couple of fastening parts, each of which adopts a configuration similar to a cylindrical bowl, which has the capability to couple under pressure, in a well-fitted manner, with one of the ends of the tubular axis, and with a perimeter surface on its snout, designed to create a stopper effect on the external face of the corresponding box wall; these parts consequently act as axial immobilising stoppers for the tubular axis with respect to the box, and in such a way that the cable-bearing reel may freely turn on this tubular axis.

As a complement to the structure described above, an opening or slot is created on another of the box walls for the cable to exit, such that the latter is directly accessible from the exterior and may be removed from the box while it is closed.

Since the unwinder of the invention has been planned to be disposable or single-use, the above-mentioned container box, as well as the tubular axis, shall be made of cardboard in order to minimise costs, and only the fastening parts shall be made of plastic, but by an injection-moulding process that may also allow for manufacturing at a low cost.

### DESCRIPTION OF THE DRAWINGS

In order to complement the description being made, and in order to facilitate a better understanding of the invention's characteristics, in accordance with a preferred example of practical embodiment thereof, as integral part of said description we attach a set of drawings wherein, for illustration purposes and not limited thereto, the following has been represented:
- Figure 1: Shows, from a perspective view, the type of cable roll the unwinder of the invention is designed for.
- Figure 2: Shows, also from a perspective view, the above- mentioned unwinder in a situation prior to insertion of the reel in the preceding figure within it.
- Figure 3: Shows a perspective exploded view of the tubular axis and its complementary fastening parts, which are a part of the above-mentioned unwinder.
- Figure 4: Shows a perspective of the unwinder in a position similar to that of Figure 2, after the reel in Figure 1 is installed therein.

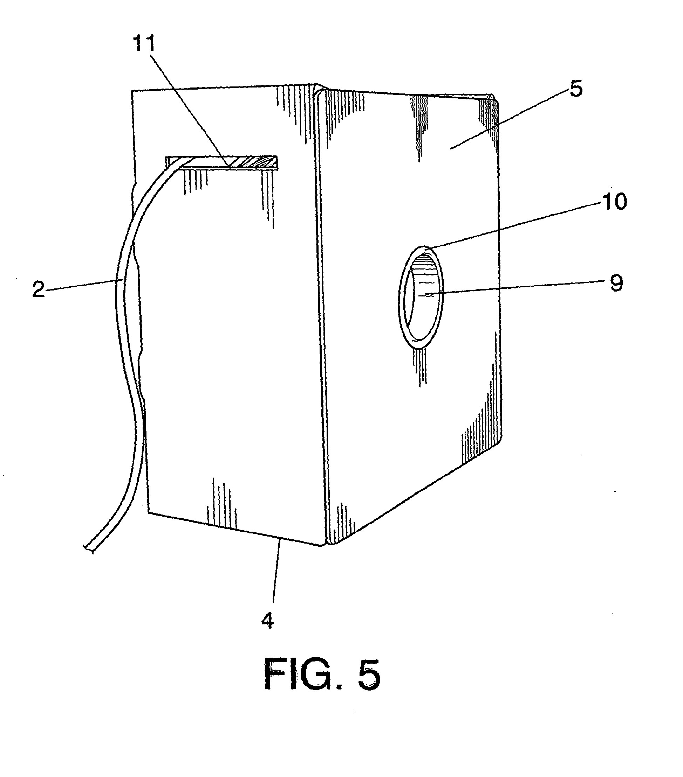

- Figure 5: Shows, finally, the unwinder as a whole, perfectly closed and in a situation of usage.

### PREFERRED EMBODIMENT OF THE INVENTION

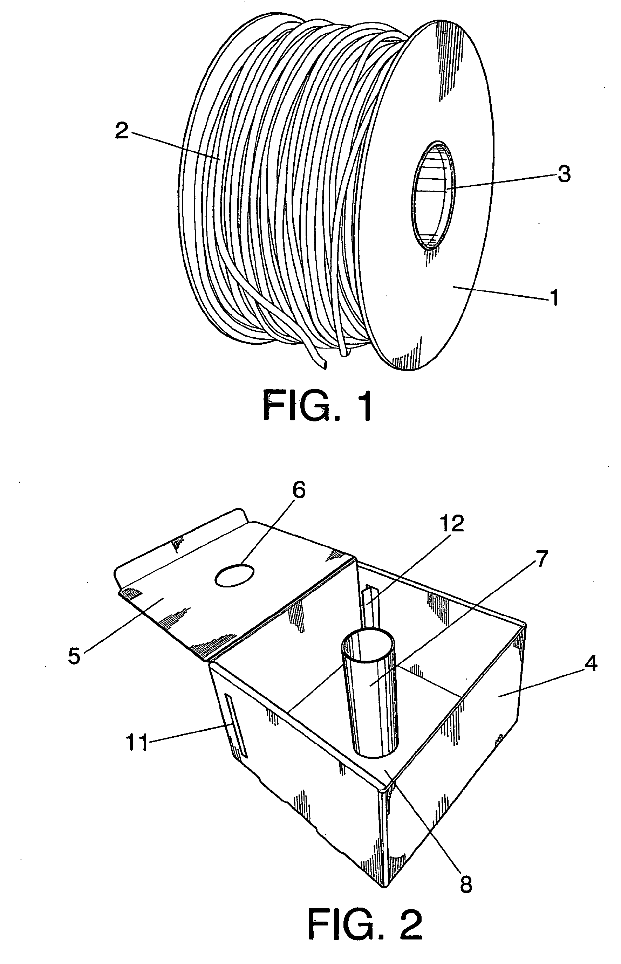

As has just been mentioned, Figure 1 represents a conventional reel (1), around which an electric cable (2) of significant length is wound, the reel (1) having a hollow axis (3).

The unwinder of the invention, which is designed for this type of reel (1), is materialised in a quadrangular prismatic cardboard box (4), with any type of conventional structuring, provided with a lid (5) for access to the interior and provided, at the bases, with two centred, circular openings (6), with a diameter smaller than that of the reel's (1) hollow axis (3), said openings (6) being designed to co-axially receive a tubular axis (7), which is meant to be placed between said bases, with a length that coincides with the distance between them; this axis (7), in turn, exhibits a diameter smaller than that of the reel's (1) hollow axis (3), in order to allow for coupling of the latter.

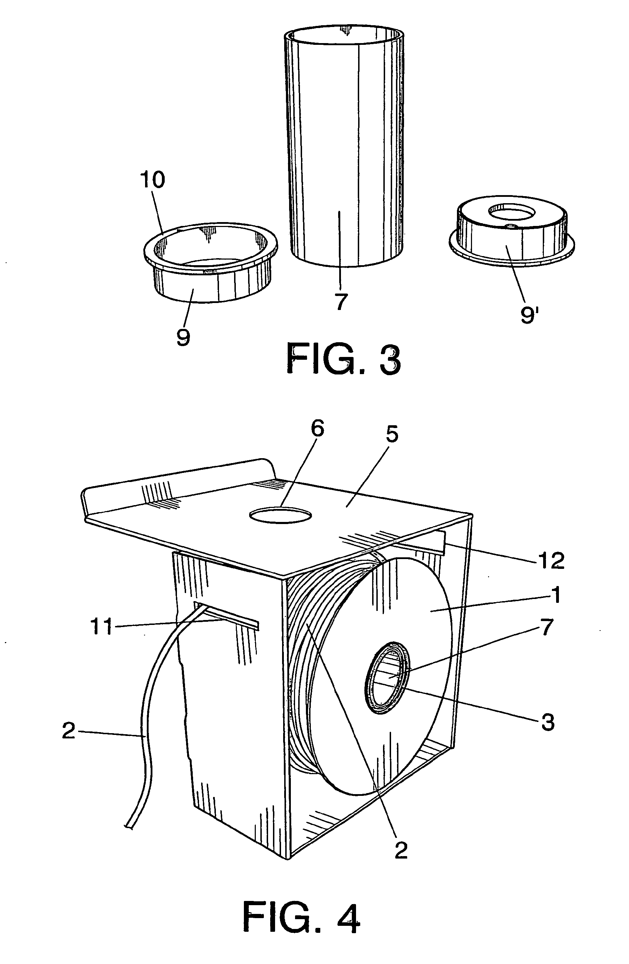

The tubular axis (7) is joined to the box's lower base (8) with the aid of a fastening part (9), which is particularly visible in Figure 3, configured as a cylindrical bowl capable of passing through the corresponding opening (6) and of coupling under pressure, in a well-fitted manner, with the likewise corresponding end of the tubular axis (7), said fastening part having a perimeter and external surface (10) at the snout level, which creates a stopper effect on the external face of the base (8) and consequently immobilises the tubular axis (7) on said base, in the position shown in Figure 2.

From this situation, it is feasible to couple the reel (1) inside the box (4), specifically by inserting the latter's tubular axis (7) in its own hollow axis (3); subsequently, the lid (5) is folded down in order to close said box and, finally, the other fastening part (9') is placed on the other end of the tubular axis (7), such that said axis is not only stabilised within the box, but stability is ensured for closure thereof.

In this situation, the reel (1) is capable of freely turning on the tubular axis (7) when it is tractioned on the cable's free end (2), which emerges to the exterior of the box through at least one opening or slot (11) which is operatively positioned on one of the box's lateral walls (4); the slot allows for tangential unwinding of the cable (2) with respect to the reel (1) and shall be preferentially supplemented by a window (12) that serves as a grip, created on the other lateral wall of the body of the box (4), and, consequently, with the appropriate dimensions to allow for insertion of the fingers during manual transport of the box.

This special mounting of the reel (1) on the tubular axis (7) joined to the body of the box (4) allows for longitudinal unwinding of the cable by a very slight traction effort, without any type of torsion being produced and, consequently, without the cable suffering any damage.

## Claims

1. Unwinder for cable rolls, especially intended for electric cables wound around a reel (1) having a hollow axis (3), of the type incorporating a prismatic box (4), with the appropriate dimensions to loosely receive within it the cable reel (1) and having, centred on opposite faces (6), a pair of openings between which a tubular axis (7), the diameter of which is smaller than that of the rest of the reel axes, is set for assembling said reel in such a manner that it may freely turn on said tubular axis, with an opening or slot (11) operatively made on one of the lateral walls of the box for the cable to exit, **characterised in that** said tubular axis (7) is supplemented by two fastening parts, embodied in two cylindrical bowls (9-9'), by way of fastening parts, having the appropriate diameter to become coupled under pressure, in a well-fitted manner, with the ends of the tubular axis (7), through the openings of the box, with a perimeter flange (10) on the snout designed to create a stopper effect on the external face of the box wall, with the specificity that one of the openings (6) for fixing the tubular axis (7) is disposed in the centre of the base (8) of the box and the other is disposed in the centre of its lid (5), in such a manner that the reel may be assembled/disassembled with the tubular axis solidly fastened to the base thereof.

2. Unwinder for cable rolls, according to claim 1, **characterised in that** both the box (4) and the tubular axis (7) are made of cardboard, in order to give the unwinder a disposable character, while the fastening parts (9-9') are made of plastic material.

## Patentansprüche

1. Abwickler für Kabelrollen, der vor allem für elektrische Kabel ausgelegt ist, die auf einer Rolle (1) mit einer Hohlachse (3) aufgewickelt sind, von der Art, die einen prismatischen Kasten (4) einschließt, der geeignete Abmessungen besitzt, um darin lose die Kabelrolle (1) aufzunehmen und der zentriert auf gegenüberliegenden Seiten (6) über ein Paar Öffnungen verfügt, zwischen denen eine röhrenförmige Achse (7) angeordnet ist, deren Durchmesser kleiner als der der restlichen Rollenachse ist, um die besagte Rolle derart zu montieren, dass sich diese frei auf der besagten röhrenförmigen Achse dreht, wobei eine Öffnung oder Schlitz (11) operativ auf einer der seitlichen Wände des Kastens angebracht ist, um das Kabel herauszuführen, **dadurch gekennzeichnet, dass** die besagte röhrenförmige Achse (7) durch zwei Befestigungsteile ergänzt wird, die als Befestigungsteile in zwei zylinderförmigen Schalen (9-9') ausgeführt sind, die einen geeigneten Durchmesser besitzen, um unter Druck auf gut befestigte Art mit den Enden der röhrenförmigen Achse (7) durch die Öffnungen des Kastens verkoppelt zu werden, wobei ein Umfangsflansch (10) an der Spitze dazu ausgelegt ist, einen Stoppeffekt auf der externen Seite der Kastenwand zu erzeugen, mit der Besonderheit, dass eine der Öffnungen (6) zur Befestigung der röhrenförmigen Achse (7) im Zentrum des Bodens (8) des Kastens und die andere im Zentrum des Deckels (5) angeordnet ist, auf derartige Weise, dass die Rolle montiert/demontiert werden kann, wenn die röhrenförmige Achse fest mit dem Boden derselben verbunden ist.

2. Abwickler für Kabelrollen nach Anspruch 1, **dadurch gekennzeichnet, dass** der Kasten (4) und die röhrenförmige Achse (7) aus Pappe bestehen, um dem Abwickler einen wegwerfbaren Charakter zu verleihen, während die Befestigungsteile (9-9') aus Kunststoff bestehen.

## Revendications

1. Dérouleur pour rouleaux de câble, spécialement destiné aux câbles électriques enroulés autour d'un dévidoir (1) possédant un axe creux (3), du type comportant un boîtier prismatique (4), aux dimensions appropriées pour recevoir à l'intérieur de lui sans le serrer le dévidoir de câble (1) et possédant, centrées sur des faces opposées (6), une paire d'ouvertures entre lesquelles un axe tubulaire (7), dont le diamètre est plus petit que celui des autres axes de dévidoir, est installé pour assembler ledit dévidoir de façon à ce qu'il puisse tourner librement sur ledit axe tubulaire, avec une ouverture ou fente (11) réalisée de manière fonctionnelle sur l'une des parois latérales du boîtier pour la sortie du câble, **caractérisé en ce que** ledit axe tubulaire (7) est complété par deux pièces de fixation, matérialisées par deux cylindres (9-9'), en guise de pièces de fixation, ayant le diamètre approprié pour être couplés sous pression, de façon bien ajustée, aux extrémités de l'axe tubulaire (7), à travers les ouvertures du boîtier, avec un rebord périphérique (10) sur le bec conçu pour créer un effet stoppeur sur la face externe de la paroi du boîtier, avec la spécificité que l'une des ouvertures (6) pour fixer l'axe tubulaire (7) est placée au centre de la base (8) du boîtier et que l'autre est placée au centre de son couvercle (5), de façon à ce que le dévidoir puisse être assemblé/désassemblé avec l'axe tubulaire solidement fixé à sa base.

2. Dérouleur pour rouleaux de câble, selon la revendication 1, **caractérisé en ce que** le boîtier (4) et l'axe tubulaire (7) sont tous deux fabriqués en carton, afin de conférer un caractère jetable au dérouleur, tandis que les pièces de fixation (9-9') sont fabriquées dans un matériau plastique.
